# Europäisches Patentamt
# European Patent Office
# Office européen des brevets

(19)

(11) Numéro de publication: **0 100 127**
**A1**

(12) ## DEMANDE DE BREVET EUROPEEN

(21) Numéro de dépôt: **83201077.1**

(51) Int. Cl.³: **A 01 M 7/00**

(22) Date de dépôt: **21.07.83**

(30) Priorité: **26.07.82 FR 8213005**

(43) Date de publication de la demande: **08.02.84**
**Bulletin 84/6**

(84) Etats contractants désignés: **BE DE GB IT LU NL**

(71) Demandeur: **SBA CHIMIE S.A., Rue de Renory, 21,**
**B-4200 Ougree (BE)**

(72) Inventeur: **Lefebvre, Emile Michel Prosper, Rue du**
**Moulin 14, B-7560 Celles (BE)**

(74) Mandataire: **De Brabanter, Maurice et al, Bureau**
**VANDER HAEGHEN 63 Avenue de la Toison d'Or,**
**B-1060 Bruxelles (BE)**

(54) **Dispositif de montage de rampes adaptées sur des matériels agricoles et industriels, en particulier des rampes de pulvérisation.**

(57) L'invention concerne un dispositif de montage de rampes adaptées sur des matériels agricoles et industriels, en particulier des rampes de pulvérisation.

Au châssis (2) d'un véhicule est lié un guide (7) en arc de cercle, ouvert vers le haut, contenu dans un plan vertical perpendiculaire à la direction de progression du véhicule et à la rampe distributrice (14, 14') est lié au moins un support (8, 8'a) disposé sur un axe passant par le milieu de la rampe et perpendiculaire à celle-ci, ce support portant au moins un galet (8', 8'a) monté dans le guide (7) de façon à pouvoir rouler dans celui-ci.

L'invention s'applique notamment aux distributeurs agricoles d'engrais, d'herbicides, d'insecticides, etc.

DISPOSITIF DE MONTAGE DE RAMPES ADAPTEES SUR DES MATERIELS
AGRICOLES ET INDUSTRIELS, EN PARTICULIER DES RAMPES DE
PULVERISATION.

La présente invention se rapporte à un dispositif de montage de rampes adaptées sur des matériels agricoles et industriels, en particulier des rampes de pulvérisation d'appareils agricoles servant à l'épandage de liquides tels que des engrais, des herbicides ou des insecticides.

On utilise entre autres en agriculture, pour le traitement de grandes surfaces, des pulvérisateurs portés ou traînés par un tracteur ou automoteurs comportant des rampes de pulvérisation horizontales montées généralement transversalement à l'arrière du véhicule porteur et munies de buses de pulvérisation. Ces rampes, dont la longueur peut atteindre des valeurs importantes, sont le plus souvent repliables en vue des déplacements sur route et se présentent sous la forme de deux bras articulés sur un cadre central, chaque bras pouvant lui-même être réalisé en plusieurs parties repliables.

Le cadre central des rampes de pulvérisation peut être fixé de manière rigide au châssis du véhicule porteur. Ce type de montage est satifsfaisant dans le cas de pulvérisations effectuées en terrain plat et régulier mais présente des inconvénients lorsque l'on travaille en terrain irrégulier. En effet, les chocs dus aux irrégularités du sol (pierres, sillons, mottes de terre ...) que subit le véhicule porteur sont transmis à la rampe, provoquant aux extrémités de celle-ci des mouvements de balancement désordonnés qui peuvent endommager la rampe et être la cause d'irrégula-

2    0100127

rités importantes dans la distribution du produit pulvérisé. De plus, si le pulvérisateur s'incline trop latéralement, la rampe risque de heurter le sol et de se déformer.

Dans les systèmes de montage connus, du type pendulaire, la rampe est suspendue en un point du châssis du véhicule porteur, de telle manière qu'elle reste horizontale lorsque le véhicule porteur s'incline latéralement. Le montage pendulaire présente cependant des désavantages comme de ne pas amortir suffisamment les chocs verticaux en terrain inégal, de subir des déplacements latéraux et de ne pas permettre une utilisation du pulvérisateur sur une pente latérale, la rampe de pulvérisation devant rester dans ce cas, non pas horizontale, mais parallèle au sol.

On a développé aussi des systèmes de montage de rampes de pulvérisation permettant de maintenir un certain parallélisme entre la rampe et le sol tout en atténuant les chocs verticaux, entre autres des systèmes dans lesquels le cadre portant la rampe de pulvérisation est suspendu au châssis du pulvérisateur par l'intermédiaire de biellettes.

Le dispositif décrit dans le brevet belge No. 795.007 de de Meeus comporte une barre de support horizontale, solidaire d'un châssis mobile, surmontant un cadre portant la rampe de pulvérisation et reliée par chacune de ses extrémités à ce cadre par l'intermédiaire de biellettes, la partie inférieure du cadre étant montée dans des glissières reliées entre elles par une barre horizontale également solidaire du châssis mobile. Le châssis mobile est relié au corps du pulvérisateur par un pivot vertical et par des amortisseurs propres à amortir la rotation du châssis mobile autour du support. Dans ce dispositif, le cadre portant la rampe de pulvérisation reste parallèle au sol et les chocs, aussi bien verticaux qu'horizontaux, sont atténués. On constate cependant que, dans certains cas, notamment lorsque le pulvérisateur se déplace sur des sols irréguliers, il arrive que l'une ou l'autre extrémité libre de la rampe cogne le sol.

En outre, il subsiste des risques d'irrégularités dans la hauteur d'épandage.

Dans le dispositif de montage de rampes de pulvérisation faisant l'objet du brevet belge No. 821.699 de Demaret, le cadre auquel est fixée la rampe de pulvérisation est suspendu à l'intervention de deux biellettes disposées dans un plan sensiblement vertical à un longeron lui-même suspendu à l'intervention de deux autres biellettes à un châssis solidaire du véhicule porteur. Ce dispositif permet d'amortir de manière satisfaisante les chocs verticaux provoqués par les irrégularités du sol ou par les cahots subis par le véhicule porteur; on n'observe pas, lors de tels chocs, de mouvements désordonnés aux extrémités de la rampe. Toutefois, le dispositif breveté par Demaret présente un inconvénient dans le cas où le pulvérisateur, travaillant en terrain plat mais inégal, se trouve incliné latéralement d'une manière prolongée, ce qui se produit, par exemple, lorsque les deux roues latérales du tracteur suivent une déclivité prolongée, comme un sillon, une trace de pneus ... En effet, si lors de chocs provoquant une inclinaison de courte durée du pulvérisateur, comme ceux engendrés par le passage des roues du tracteur sur une pierre ou sur une motte de terre, la rampe de pulvérisation reste horizontale et parallèle au sol, lorsque le pulvérisateur est incliné latéralement pendant une durée assez longue, la rampe de pulvérisation finit par prendre une certaine inclinaison dans le sens de l'inclinaison du pulvérisateur; la rampe de pulvérisation ne reste plus, dans ce cas, parallèle au sol, de sorte que la distribution du produit pulvérisé ne s'effectue plus d'une manière régulière et qu'il subsiste un certain risque de heurt entre une extrémité de la rampe et le sol.

Avec ce système, la vitesse d'avancement doit nécessairement être très rapide; dans le cas d'une vitesse trop lente et sur terrain inégal, ce système perd beaucoup de son efficacité.

La présente invention a pour objet un dispositif de montage de rampes de pulvérisation permettant d'éviter ces inconvénients.

Dans le dispositif suivant l'invention, au châssis du véhicule est lié un guide en arc de cercle, ouvert vers le haut, contenu dans un plan vertical perpendiculaire à la direction de progression du véhicule, et à la rampe distributrice est lié au moins un support disposé sur l'axe passant par le milieu de la rampe et perpendiculaire à celle-ci, ce support portant au moins un galet monté dans le guide de façon à pouvoir rouler dans celui-ci.

Dans une forme de réalisation préférée du dispositif suivant l'invention, à la rampe distributrice sont liés deux supports disposés symétriquement par rapport à l'axe passant par le milieu de la rampe et perpendiculaire à celle-ci, ces supports portant chacun au moins un galet monté dans le guide de façon à pouvoir rouler dans celui-ci.

Le dispositif comprend avantageusement un système de rappel comprenant au moins un ressort lié d'une part au milieu de la rampe et d'autre part au milieu du châssis du véhicule.

Plus spécifiquement, suivant l'invention, la rampe de pulvérisation est fixée à un cadre central assujetti à une barre de support solidaire du châssis du véhicule du pulvérisateur et située dans un plan vertical en dessousde la barre supérieure dudit cadre, cet assujettissement étant réalisé par un guide en forme d'arc de cercle attaché à la barre de support, et par des galets soutenus par le guide et montés sur deux jambes attachées à la barre inférieure du cadre central portant la rampe. Des ressorts de rappel sont fixés de part et d'autre du cadre central, reliant le milieu de la barre supérieure de celui-ci au milieu de la barre de support.

En outre, la barre de support est munie à ses extrémités de guides entre lesquels peut se déplacer la barre supérieure du cadre central. De préférence, une autre barre, solidaire du châssis du véhicule portant le pulvérisateur, est prévue à la partie inférieure du dispositif en dessous du cadre central, cette autre barre étant également munie à ses extrémités de guides entre lesquels peut se déplacer la barre inférieure du cadre central.

D'autres particularités de l'invention ressortiront de la description suivante.

Les dessins joints au présent mémoire, donnés à titre d'exemple, permettront de mieux comprendre l'invention.

Sur ces dessins :

- la figure 1 est une représentation schématique en perspective du dispositif suivant l'invention, vu de l'arrière ;

- la figure 2 est une représentation analogue à celle de la figure 1, montrant le dispositif suivant l'invention lors d'une inclinaison latérale du véhicule portant le pulvérisateur.

Dans ces dessins, on s'est limité à montrer le dispositif de montage suivant l'invention, du fait que ce dispositif peut être monté sur n'importe quelle machine agricole. Ne sont donc pas représentés, le véhicule portant le pulvérisateur, ni la rampe de pulvérisation proprement dite, fixée au cadre central, ni d'autres accessoires classiques des pulvérisateurs agricoles.

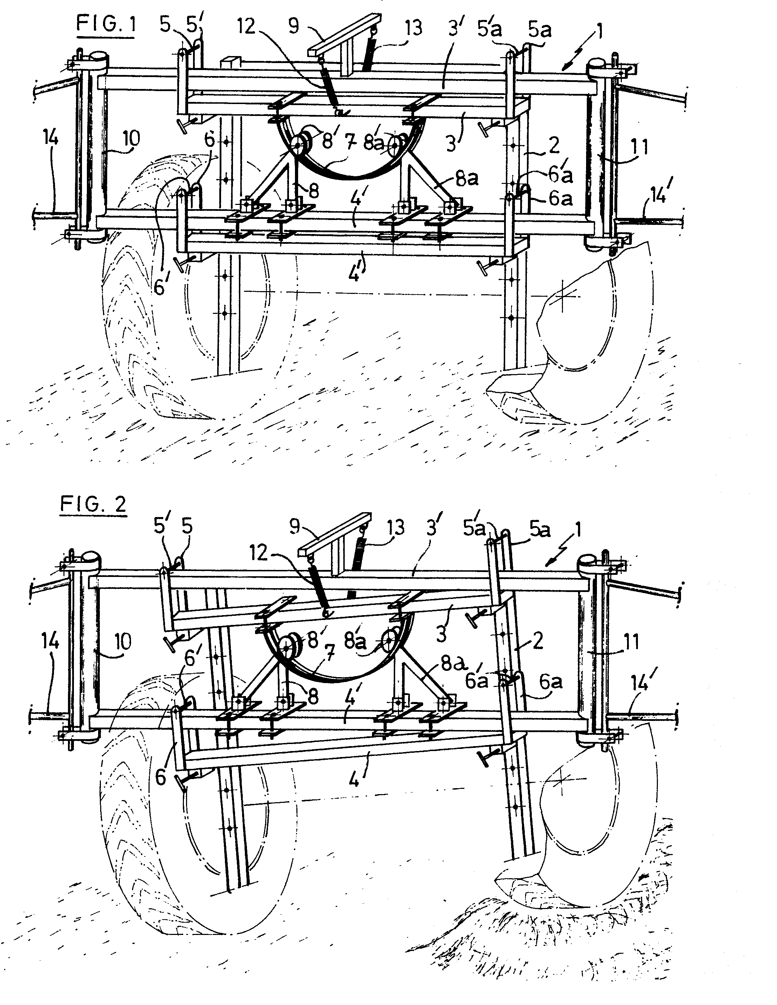

Sur les figures 1 et 2, le cadre central auquel est fixée la rampe de pulvérisation, est désigné par le numéro de référence 1 et le châssis du véhicule portant le pulvérisateur, par le numéro de référence 2. Au châssis 2 sont fixées solidairement deux barres horizontales 3 et 4 munies chacune, à leurs extrémités , des guides 5, 5a, 6 et 6a, composés chacun de deux branches parallèles reliées d'un côté à la barre respective ,3 et 4, et de l'autre côté, par leurs extrémités libres, par des pièces de retenue 5', 5'a, 6', 6'a. Les barres supérieure et inférieure 3' et 4' du cadre central 1 dont les montants sont indiqués par 10 et 11 sont situées toutes deux, dans un plan vertical, au-dessus, respectivement, des barres 3 et 4 solidaires du châssis du véhicule porteur et peuvent se déplacer latéralement au-dessus de ces barres en passant par les guides 5, 5a, 6 et 6a.

Le cadre 1 est suspendu à la barre de support 3 par l'intermédiaire d'un système de roulement constitué par un chemin de roulement ou guide 7 et par des jambes de suspension 8 et 8a. Le guide 7 a la forme d'un arc de cercle. Il est attaché à la barre de support 3 et s'étend en dessous de celle-ci. Les deux jambes de suspension 8 et 8a, ayant la forme d'équerres, sont attachées à la barre inférieure 4' du cadre 1 et portent, à leurs extrémités supérieures, des paires de roulettes ou de galets 8' et 8'a s'appuyant sur le guide 7 de part et d'autre du milieu de ce guide.

Dans le système de roulement tel que représenté sur les figures 1 et 2, le guide 7 est formé de deux profilés en U légèrement espacés et les jambes de suspension 8 et 8a ont leurs extrémités supérieures introduites dans l'espace entre les profilés en U et portent chacune à ces extrémités les deux roulettes 8' et 8'a de la paire respective, engagées dans les deux profilés en U.

D'autres types de systèmes de roulement peuvent évidemment être utilisés dans le cadre de la présente invention. Ainsi, on peut utiliser, pour le guide en forme d'arc de cercle, un seul profilé en U ou d'autres types de profilés en même temps que des jambes de suspension munies de moyens de roulement adaptés à ces profilés.

Le dispositif suivant l'invention comporte encore un ou plusieurs ressorts 12, 13, reliant les parties médianes de la barre supérieure 3' du cadre 1 et de la barre de support 3. Dans le dispositif représenté aux figures 1 et 2, une pièce d'attache en forme de potence 9 est fixée transversalement au milieu de la barre supérieure 3' du cadre 1 et les deux ressorts 12 et 13 sont attachés entre les extrémités des bras de la potence 9 et le milieu de la barre de support 3, de part et d'autre de cette barre. Bien que deux ressorts aient été prévus dans le dispositif représenté aux figures 1 et 2, il est possible aussi de n'utiliser qu'un seul ressort. En outre, d'autres moyens d'attache qu'une pièce en forme de potence peuvent être utilisés dans le cadre de la présente invention, comme par exemple une simple traverse placée au milieu de la barre supérieure du cadre 1.

Le dispositif suivant l'invention permet d'amortir les chocs et de maintenir la rampe de pulvérisation sensiblement horizontale lors d'une inclinaison latérale du véhicule portant le pulvérisateur.

Comme représenté à la figure 2, lorsque le véhicule portant le pulvérisateur est soulevé latéralement à cause d'une irrégularité de terrain, la rampe de pulvérisation (montrée partiellement en 14 et 14') solidaire du cadre 1, suspendue au véhicule porteur par l'intermédiaire du guide 7 et des jambes de suspension 8 et 8a, ne suit pas l'inclinaison du tracteur, mais, par suite du déplacement des roulettes des jambes de suspension 8 et 8a dans le guide 7, amorce un mouvement de

8    0100127

déplacement par rapport au châssis 2 du véhicule porteur. Ce déplacement relatif a pour effet de soulever le côté 14 de la rampe qui aurait été abaissé si la rampe avait été fixée solidairement au châssis 2 du véhicule porteur et, inversement, d'abaisser l'autre côté 14' de la rampe. En même temps qu'a lieu ce déplacement relatif, les ressorts attachés à la potence 9 , reliant les parties médianes de la barre supérieure 3' du cadre 1 et de la barre de support 3, se tendent et exercent un effet de rappel, ramenant notamment l'ensemble du dispositif à sa position normale en suivant l'inclinaison du véhicule porteur dès que celui-ci a repris sa position horizontale. Les ressorts contribuent à amortir les chocs et les déplacements latéraux.

Il est possible de régler de façon très simple, par le choix ou la tension des ressorts utilisés, la sensibilité de cet effet d'amortissement dû aux ressorts, en fonction de la longueur et du poids de la rampe.

Grâce aux effets conjugués du système de suspension par roulement et des ressorts du dispositif de montage suivant l'invention, la rampe de pulvérisation en terrain inégal est maintenue sensiblement horizontale et ne présente pas à ses extrémités de mouvements de balancement désordonnés. On évite ainsi des irrégularités dans l'épandage ainsi que les risques de heurts entre les extrémités de la rampe  et le sol.

Lorsque le véhicule porteur se trouve incliné latéralement pendant une durée prolongée, ce qui peut être dû au fait que les roues latérales du tracteur suivent un sillon, la rampe de pulvérisation reste sensiblement parallèle au sol, et l'épandage continue à s'effectuer de manière régulière sans heurts entre la rampe et le sol.

REVENDICATIONS

1.- Dispositif de montage de rampes adaptées sur des matériels agricoles et industriels, en particulier des rampes de pulvérisation, caractérisé en ce qu'au châssis (2) d'un véhicule est lié un guide (7) en arc de cercle, ouvert vers le haut, contenu dans un plan vertical perpendiculaire à la direction de progression du véhicule et à la rampe distributrice (14, 14') est lié au moins un support (8, 8a) disposé sur un axe passant par le milieu de la rampe et perpendiculaire à celle-ci, ce support portant au moins un galet (8', 8'a) monté dans le guide (7) de façon à pouvoir rouler dans celui-ci.

2.- Dispositif suivant la revendication 1, caractérisé en ce qu'à la rampe distributrice (14, 14') sont liés deux supports (8, 8a) disposés symétriquement par rapport à un axe passant par le milieu de la rampe (14, 14') et perpendiculaire à celle-ci, ces supports (8, 8a) portant chacun au moins un galet (8', 8'a) monté dans le guide (7) de façon à pouvoir rouler dans celui-ci.

3.- Dispositif suivant l'une quelconque des revendications 1 et 2, caractérisé en ce qu'il comprend un système de rappel comprenant au moins un ressort (12, 13) lié d'une part au milieu de la rampe (14, 14') et d'autre part au milieu du châssis (2) du véhicule.

4. Dispositif suivant l'une quelconque des revendications 1 et 2, caractérisé en ce que la rampe de pulvérisation (14, 14') est fixée à un cadre central (1) assujetti à une barre de support (3) solidaire du châssis (2) du véhicule du pulvérisateur et située dans un plan vertical en dessous de la barre supérieure (3') dudit cadre (1), cet assujettissement étant réalisé par un guide ou chemin de roulement (7) en forme d'arc de cercle attaché à la barre de support (3) et par des galets (8', 8'a) soutenus par le guide (7) et montés sur deux jambes (8, 8a) attachées à la barre inférieure (4') du cadre central (1) portant la rampe (14, 14').

5.- Dispositif suivant la revendication 4, caractérisé en ce que des ressorts de rappel (12, 13) sont fixés de part et d'autre du cadre central (1), reliant le milieu de la barre supérieure (3') de celui-ci au milieu de la barre de support (3).

6.- Dispositif suivant l'une quelconque des revendications 4 et 5, caractérisé en ce que la barre de support (3) est munie à ses extrémités de guides (5, 5a) entre lesquels peut se déplacer la barre supérieure (3') du cadre central (1).

7.- Dispositif suivant l'une quelconque des revendications 4 à 6, caractérisé en ce qu'une barre (4), solidaire du châssis (2) du véhicule portant le pulvérisateur, est prévue à la partie inférieure du dispositif, en dessous du cadre central (1), cette barre (4) étant munie à ses extrémités de guides (6, 6a) entre lesquels peut se déplacer la barre inférieure (4') du cadre central (1).

FIG.1

FIG. 2

Office européen
des brevets

**RAPPORT DE RECHERCHE EUROPEENNE**

0100127

Numéro de la demande

EP 83 20 1077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-A-1 607 387 (D. MAASS)<br>* Page 6, ligne 5 - page 8, ligne 3; figures 1-3 * | 1-5 | A 01 M 7/00 |
| Y | | 6-7 | |
| Y | FR-A-2 256 714 (BERTHOUD S.A.)<br>* Page 4, ligne 36 - page 5, ligne 12; figures 8-10 * | 6-7 | |
| X | DE-C- 829 070 (ICI)<br>* Page 2, lignes 98-101; figures 1-2 * | 1 | |
| D,A | FR-A-2 289 116 (P. DEMARET) | | |
| D,A | FR-A-2 215 885 (DE MEEUS D'ARGENTEUIL) | | |

DOMAINES TECHNIQUES RECHERCHES (Int. Cl. ³)

A 01 M

Le présent rapport de recherche a été établi pour toutes les revendications

| Lieu de la recherche<br>LA HAYE | Date d'achèvement de la recherche<br>22-09-1983 | Examinateur<br>NEHRDICH H.J |
|---|---|---|